Europäisches Patentamt

**European Patent Office**

**Office européen des brevets**

(19)

(11) Veröffentlichungsnummer : **0 097 271 B1**

(12) **EUROPÄISCHE PATENTSCHRIFT**

(45) Veröffentlichungstag der Patentschrift :
30.10.85

(21) Anmeldenummer : 83105513.2

(22) Anmeldetag : 03.06.83

(51) Int. Cl.⁴ : **B 23 C  3/06**

(54) **Kurbelwellenfräsmaschine.**

(30) Priorität : 22.06.82 DE 3223285

(43) Veröffentlichungstag der Anmeldung :
04.01.84 Patentblatt 84/01

(45) Bekanntmachung des Hinweises auf die Patenterteilung : 30.10.85 Patentblatt 85/44

(84) Benannte Vertragsstaaten :
AT DE FR GB IT SE

(56) Entgegenhaltungen :
AT-B-   286 067
DE-B- 2 915 662
DE-U- 7 106 698

(73) Patentinhaber : Gebr. Heller Maschinenfabrik GmbH
Postfach 1428 Neuffener Strasse 54
D-7440 Nürtingen (DE)

(72) Erfinder : Schmid, Karlheinz
Amselweg 2
D-7441 Neckartenzlingen (DE)

(74) Vertreter : Reinländer & Bernhardt Patentanwälte
Orthstrasse 12
D-8000 München 60 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft eine Kurbelwellenfräsmaschine nach dem Oberbegriff des Anspruchs 1.

Eine solche Kurbelwellenfräsmaschine ist bekannt (DE-U-71 06 698, insbesondere Fig. 5). Bei dieser Konstruktion ist unterhalb des Werkstücks ein Schwenkzapfen mit einer Rundführung angeordnet und darunter befindet sich ein Zustellantrieb ; der Innenfräser selbst ist in einer Kreisscheibe exzentrisch gelagert, mittels derer er auf einer Kreisbahn um den zu bearbeitenden Hubzapfen herumgeführt wird. Der zu bearbeitende Hubzapfen und damit die Kurbelwelle steht zwar während der Bearbeitung fest, muß jedoch zwischen zwei Bearbeitungen jeweils so gedreht werden, daß der zu bearbeitende Hubzapfen eine vorbestimmte Lage einnimmt.

Bei einer Kurbelwellenfräsmaschine mit rotierendem Werkstück ist eine um eine parallel zur Werkstückachse verlaufende Schwenkachse verschwenkbare Fräseinheit mit Erfolg zur Lösung bestimmter Probleme eingesetzt worden (DE-AS 29 15 662). Bei einer Modifikation der bekannten Anordnung können sich also sehr wohl Vorteile ergeben, die für die Wahl einer Fräseinheit sprechen, die — im Gegensatz zu der konventionellen Art — um eine parallel zur Werkstückachse verlaufende Schwenkachse verschwenkbar ist.

Kurbelwellenfräsmaschinen mit Innenfräser haben gegenüber solchen mit Außenfräser sowie gegenüber Kurbelwellendrehmaschinen einige Vorteile, so daß Kurbelwellenfräsmaschinen mit Innenfräser in neuerer Zeit überwiegend eingesetzt werden. Da der Innenfräser das Werkstück vollständig umgibt, ergeben sich jedoch gegenüber den früher üblichen Maschinen sowohl Stabilitätsprobleme als auch Probleme hinsichtlich der Späneabfuhr bzw. der Ablagerung von Spänen auf Fräserführungsflächen.

Diese Stabilitätsprobleme ergeben sich aus der Notwendigkeit, die Fräseinheit vollständig aus dem Werkstückbereich zurückziehen zu können, und deshalb wurden die Spannstöcke und Spannfutter für das Werkstück so ausgebildet, daß das eigentliche Spannfutter in einem Hals angeordnet wird, der aus dem Spannstock in Richtung der Werkstückachse vorsteht, wobei der Abstand zwischen dem eigentlichen Spannfutter und dem Spannstock entsprechend der Ausdehnung der Fräseinheit einschließlich der sie tragenden Bauteile in Richtung der Werkstückachse zu dimensionieren ist. Da andererseits natürlich der das Spannfutter tragende Spannstockhals einen möglichst kleinen Durchmesser haben muß — dieser muß auf jeden Fall kleiner sein als der lichte Durchmesser des Innenfräsers — ergibt sich zwangsläufig eine nur ibegrenzte Stabilität, die gerade in Verbindung mit einem relativ labilen Werkstück, wie es eine Kurbelwelle darstellt, zu aufwendigen Abstützmaßnahmen zwingt bzw. die Leistungsfähigkeit der Maschine begrenzt.

Zum Schutz der Führungen gegen herabfallende Späne sind Abdeckungen verwendet worden, das Grundproblem, daß Führungsflächen vorhanden sind, auf denen sich herabfallende Späne absetzen können, ist jedoch nicht gelöst worden.

Aufgabe der Erfindung ist es deshalb, eine Kurbelwellenfräsmaschine mit Innenfräser so auszubilden, daß der das Spannfutter tragende Spannstockhals ganz entfallen kann oder wenigstens nur die minimale Länge haben muß, d. h. nicht länger zu sein braucht als die Ausdehnung des Innenfräsers selbst in Richtung der Werkstücklängsachse (abzüglich der Länge des Spannfutters), und daß sich vom Werkstück herabfallende Späne nicht auf Führungsflächen ablagern können. Wenn der Innenfräser, wie heute üblich, über eine Trommel gelagert ist, bezieht die Ausdehnung des Innenfräsers in diesem Sinne auch die Ausdehnung der Trommel ein.

Ausgehend von der Konstruktion nach dem Oberbegriff des Anspruchs 1 kann die der Erfindung zugrundeliegende Aufgabe erfindungsgemäß durch die vorgenommenen Abänderungen der bekannten Konstruktion gemäß Kennzeichenteil des Anspruchs 1 gelöst werden.

Durch das erste kennzeichnende Merkmal wird erreicht, daß — wie bei der bekannten Kurbelwellenfräsmaschine mit rotierendem Werkstück — die Fräseinheit sehr schmal gebaut werden kann, ohne daß die Stabilität beeinträchtigt wird, weil Raum für eine zusätzliche Abstützung der Fräseinheit zur Verfügung steht, sei es eine kreisbogenförmige Führung für die Fräseinheit am Schlitten in radialem Abstand von der Schwenkachse, sei es eine axial ausgedehnte Schwenklagerung der Fräseinheit im Schlitten, da bei Lage der Schwenkachse seitlich oder oberhalb des Werkstücks für eine axiale Ausdehnung der Schwenklagerung praktisch beliebig viel Platz zur Verfügung steht, ohne daß der Raum zwischen den Spannstöcken hierzu verlängert werden müßte.

Durch das zweite kennzeichnende Merkmal wird die Kreisscheibe der bekannten Konstruktion, mit der der Innenfräser exzentrisch auf einer Kreisbahn um den zu bearbeitenden Zapfen herumgeführt wurde, und die zugehörige Rundführung beseitigt, so daß auch kein sich in Richtung der Werkstücklängsachse erstreckender Antrieb für diese Kreisscheibe benötigt wird, also auch hierfür kein Raum zwischen den Spannstöcken benötigt wird. Durch das dritte kennzeichnende Merkmal wird erreicht, daß zur Freigabe des Arbeitsraums zum Werkstückwechsel die Fräseinheit tatsächlich nur so weit zurückgefahren zu werden braucht, daß der Innenfräser das Spannfutter frei läßt, so daß die Auskragung des Spannfutters vom Spannstock sehr klein gehalten werden kann bzw. dieses unmittelbar am zugehörigen Spannstock sitzen kann.

Der Schwenkzapfenträger kann bei der erfindungsgemäßen Kurbelwellenfräsmaschine als vertikal verschiebbarer Schlitten ausgebildet sein. Bei dieser Konstruktion kann die axiale Ausdehnung der Fräseinheit im Bereich unterhalb des Werkstücks auf die axiale Ausdehnung des Innenfräsers (gegebenenfalls einschließlich einer ihn tragenden Trommel) in Richtung der Werkstücklängsachse verkürzt werden. Das bedeutet, daß der Abstand der Vorderkante der Spannfutter von den eigentlichen Spannstöcken ebenfalls nicht größer zu sein braucht, und zwar auf beiden Seiten. Das bringt eine beträchtliche Stabilitätsverbesserung vor allem dann mit sich, wenn die Kurbelwellenfräsmaschine mit zwei Fräseinheiten ausgestattet werden soll.

Die Anordnung des Innenfräserantriebs, also insbesondere des Fräsermotors, läßt sich besonders günstig bei der Ausführungsform der Erfindung gemäß Anspruch 3 lösen, da der den Innenfräser direkt tragende Teil weder vom Platzangebot noch von der Festigkeit her zur Aufnahme des Fräsermotors ausgebildet sein muß und die entsprechenden Vorkehrungen an anderer Stelle getroffen werden können, wo die Einschränkungen hinsichtlich des Platzbedarfs wesentlich geringer sind bzw. sogar wegfallen.

Eine besonders leichte Konstruktion ergibt sich jedoch, wenn gemäß Anspruch 4 auch der Schwenkzapfenträger um eine Schwenkachse verschwenkbar ist.

Bei der erfindungsgemäßen Konstruktion ist es möglich, als Längsführung ein Vertikalbett zu verwenden, wie es beispielsweise durch die DE-AS 29 15 662 für derartige Zwecke bekannt geworden ist, derzeit wird jedoch bevorzugt, ein herkömmliches Horizontalbett zu verwenden, die Längsschlittenführung jedoch gemäß Anspruch 5 anzuordnen, so daß keine vom Werkstück herabfallenden Späne sich auf dieser Führung ablagern können.

Die Erfindung soll anhand von drei in der Zeichnung dargestellten Ausführungsbeispielen näher erläutert werden ; es zeigen :

Figur 1 einen Querschnitt durch eine erste Ausführungsform einer Kurbelwellenfräsmaschine nach der Erfindung ;

Figur 2 eine teilweise geschnittene Frontansicht der Kurbelwellenfräsmaschine nach Figur 1 ;

Figur 3 einen Figur 1 entsprechenden Querschnitt durch eine zweite Ausführungsform einer Kurbelwellenfräsmaschine nach der Erfindung ;

Figur 4 eine Frontansicht der Kurbelwellenfräsmaschine nach Figur 3 ;

Figur 5 einen Figur 1 entsprechenden Querschnitt durch eine dritte Ausführungsform einer Kurbelwellenfräsmaschine nach der Erfindung ; und

Figur 6 eine Frontansicht der Kurbelwellenfräsmaschine nach Figur 5.

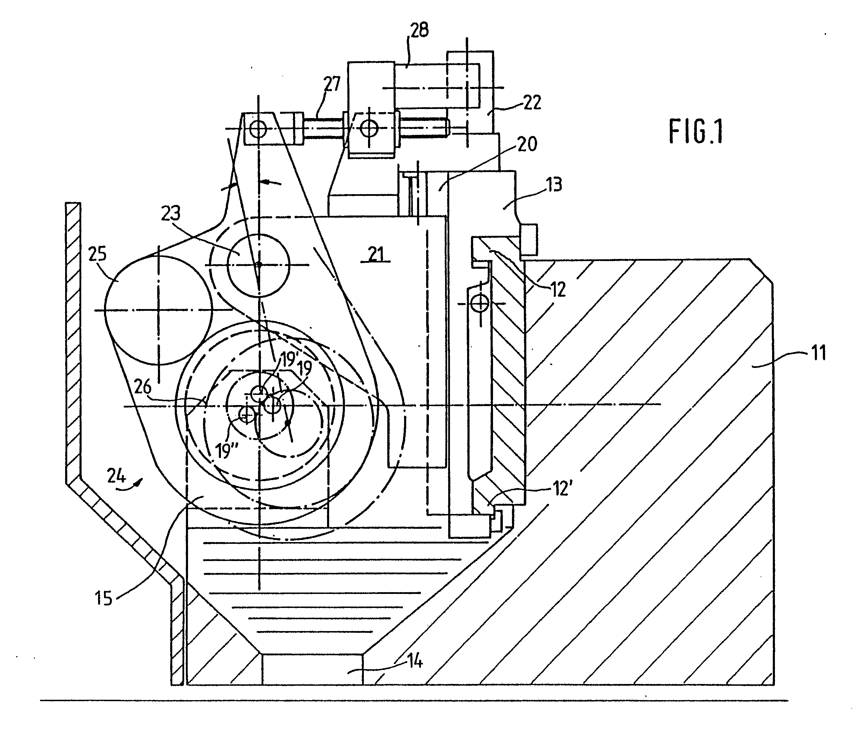

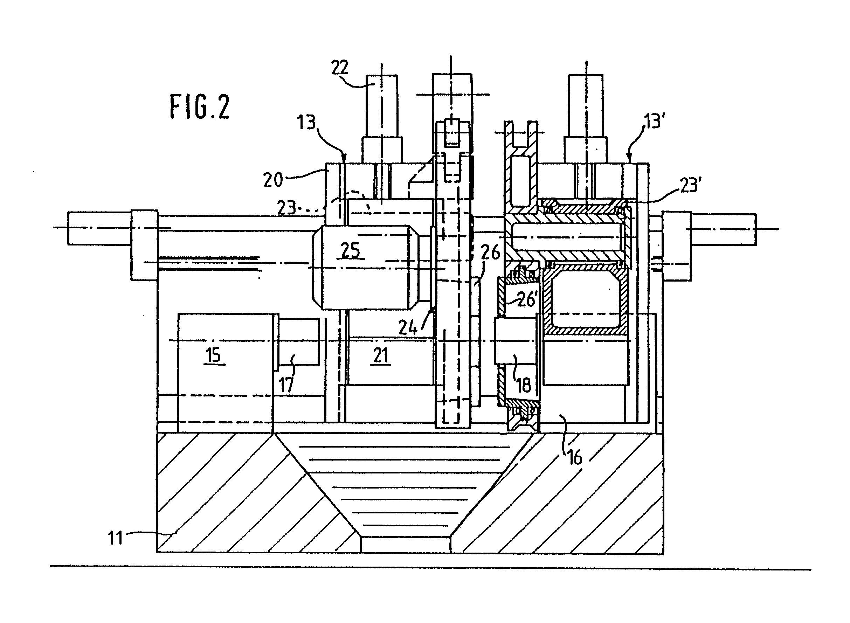

Die in Figuren 1 und 2 dargestellte Kurbelwellenfräsmaschine weist ein Bett 11 auf, beispielsweise aus Beton, das in vertikaler Ebene angeordnete Längsführungen 12 und 12' trägt, an denen ein Längsschlitten 13 horizontal verschiebbar ist. Unterhalb des Längsschlittens 13 ist ein Raum 14 für einen nicht dargestellten Späneförderer vorgesehen. Ferner trägt das Maschinenbett 11 zwei Spannstöcke 15 und 16 mit Spannfuttern 17 bzw. 18, in denen die zu bearbeitende, der Übersichtlichkeit halber nur schematisch durch unterschiedliche, nicht gleichzeitig zu bearbeitende Hubzapfenschnitte 19, 19', 19'' angedeutete Kurbelwelle in bekannter Weise eingespannt wird, und zwar derart, daß die Kurbelwelle während des gesamten Bearbeitungsvorgangs stillsteht, auch beim Übergang von der Bearbeitung eines Zapfens zu der des nächsten.

Der Längsschlitten 13 trägt seinerseits eine Vertikalführung 20, in der ein Vertikalschlitten 21 auf und ab bewegbar ist, und zwar mittels eines Vorschubantriebs 22.

Im oberen Teil des Vertikalschlittens 21 ist ein Schwenkzapfen 23 angeordnet, vorzugsweise, wie beim dargestellten Ausführungsbeispiel, senkrecht über der Kurbelwellenachse, auf dem die eigentliche Fräseinheit 24 mit einem Fräserantriebsmotor 25, einem nur schematisch dargestellten Innenfräser 26 und einem oberhalb des Schwenkzapfens 23, d. h. auf der dem Innenfräser 26 abgewandten Seite dieses Schwenkzapfens 23 angreifenden Vorschubantrieb in Form einer Kugelrollspindel 27, die mittels eines numerisch angetriebenen Motors 28 verschiebbar ist, der auf der Oberseite des Vertikalschlittens 21 angeordnet ist, verschwenkbar gelagert ist.

Wie besonders deutlich aus Figur 2 erkennbar ist, befinden sich alle Elemente der Fräseinheit 24 einschließlich des Vertikalschlittens 21 und des Längsschlittens 13 auf einer Seite einer durch den Innenfräser 26 verlaufenden Ebene, und zwar auf der Seite dieser Ebene, die dem einen Spannstock 15 zu weist, mit anderen Worten die in der Ruhestellung des Längsschlittens 13, d. h. in der in der Darstellung der Figur 2 links liegenden Extremstellung dem Arbeitsraum und einem darin befindlichen Werkstück abgewandt ist, so daß der Arbeitsraum zum Werkstückwechsel völlig frei ist. Bei der in Figuren 1 und 2 dargestellten Ausführungsform der Erfindung ist ein zweiter Längsschlitten 13' vorgesehen, der — abgesehen von der spiegelbildlichen Ausführung — identisch zum bereits beschriebenen Längsschlitten 13 ausgebildet ist, und auch die gleichen Bauelemente trägt, so daß auf eine erneute Beschreibung verzichtet werden kann. Dieser zweite Längsschlitten 13' ist in Figur 2 in seiner Ruhestellung dargestellt ; ersichtlich greift kein Element in den Arbeitsraum zwischen den beiden Spannfuttern 17 und 18 über ; vielmehr stehen alle Elemente nach der dem Arbeitsraum abgewandten Seite vor. Der jeweilige Schwenkzapfen 23 bzw. 23' befindet sich sowieso oberhalb des Innenfräsers 26 bzw. 26' und damit auch zwangsläufig oberhalb des Spannstocks 15 bzw. 16 ; der Fräsermotor 25 und sein nicht dargestelltes Gegenstück in der in Figur 2 rechts dargestellten Fräseinheit befindet sich seitlich oberhalb des Spannstockes 15 bzw. 16, so daß die jeweilige Einheit tatsächlich in die beschriebene Ruhestellung gefahren werden kann.

Mit der Maschine nach Figuren 1 und 2 wird wie folgt gearbeitet : Zum Einlegen einer zu bearbeitenden Kurbelwelle wird der Schlitten 13 ganz nach links (gesehen in Figur 2) verfahren, ebenso wie der Längsschlitten 13' ganz nach rechts verfahren wird ; dabei müssen sich der Vertikalschlitten 21 und die Fräseinheit 24 in ihrer jeweiligen Mittelstellung befinden, so daß der Innenfräser 26 über das entsprechende Spannfutter 17 bzw. 18 gefahren werden kann ; ebenfalls müssen evtl. in üblicher Weise vorgesehene, der Übersichtlichkeit halber nicht dargestellte Lünetten in die entsprechenden Ruhestellungen gefahren werden. Wie erwähnt ist in dieser Stellung der Schlitten 13 und 13' der Raum zwischen den beiden Spannfuttern 17 und 18 völlig frei zugänglich.

Die Kurbelwelle wird dann in üblicher Weise eingespannt, und zwar derart, daß die zu bearbeitenden Hubzapfen die vorbestimmten Stellungen einnehmen, wie in Figur 1 schematisch für in Längsrichtung versetzte Hubzapfen bei 19 und 19' bzw. 19'' angedeutet ; es sei vermerkt, daß bei ein und derselben Kurbelwelle die schematisch angegebenen Positionen für die einzelnen Hubzapfen nicht gemeinsam auftreten können.

Anschließend werden die beiden Längsschlitten 13 und 13' nach rechts bzw. links verfahren, bis sich der Innenfräser 26 bzw. 26' an der richtigen Stelle dem zu bearbeitenden Hubzapfen gegenüber befindet. Die jeweils benachbarten Hauptlager werden dann gegebenenfalls mit einer nicht dargestellten Lünette in üblicher Weise abgestützt. Je nach der Stellung des zu bearbeitenden Hubzapfens wird dann die Fräseinheit 24 bei laufendem Fräsermotor 25 durch Verfahren des Vertikalschlittens 21 und/oder Verschwenken mittels Vorschubantrieb 27, 28 auf den zu bearbeitenden Hubzapfen zu vorgeschoben, bis der Innenumfang des Fräsers am Soll-Außenumfang des Hubzapfens angekommen ist. Anschließend werden der Vorschubantrieb 22 des Vertikalschlittens 21 und der Antriebsmotor 28 des Schwenk-Vorschubantriebes numerisch derart gesteuert, daß der Innenfräser 26 bzw. 26' auf einer Kreisbahn um den zu bearbeitenden Hubzapfen, beispielsweise 19, herumgeführt wird, wie das bei der eingangs genannten bekannten Konstruktion nach dem DE-GM 71 06 698 durch Verdrehen der dort verwendeten Kreisscheibe erreicht wird in der der eigentliche Innenfräser exzentrisch gelagert ist. Die numerische Steuerung von zwei orthogonal zueinander wirkenden Vorschubantrieben bei Kurbelwellenfräsmaschinen ist bekannt (vergl. beispielsweise AT-PS 286 067) und braucht deshalb nicht näher erläutert zu werden ; es sei lediglich erwähnt, daß es für die eigentliche Steuerung selbstverständlich völlig gleichgültig ist, ob die beiden Vorschubbewegungen lineare Bewegungen sind, wie das bisher üblich war, oder Schwenkbewegungen, wie bei der Fräseinheit 24, es ist lediglich der mathematische Zusammenhang zwischen einem Digitalschritt des einen Vorschubantriebs 22 und einem Digitalschritt des anderen Vorschubantriebs 28 je nach Bewegungsform (Linearbewegung oder Schwenkbewegung) entsprechend abzuleiten.

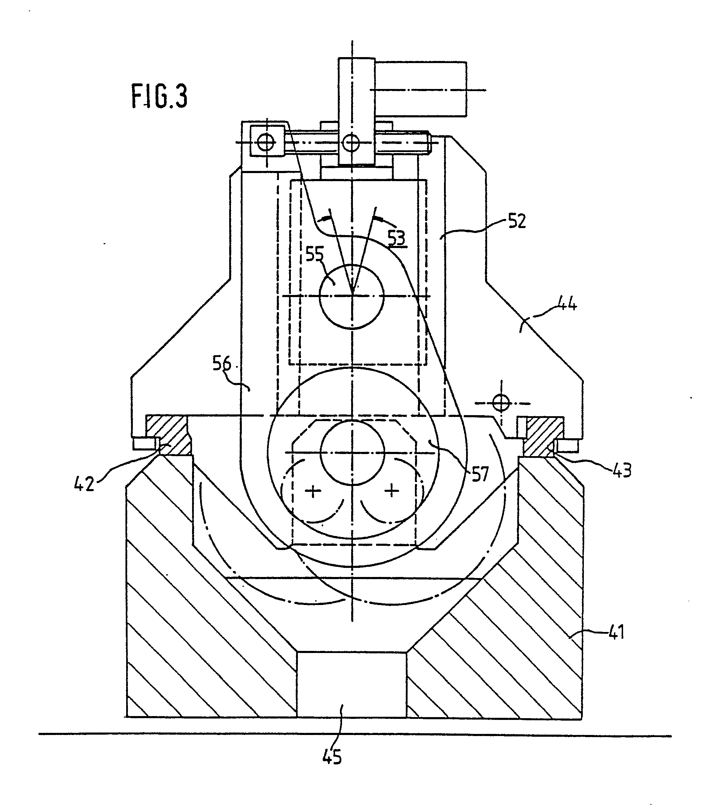

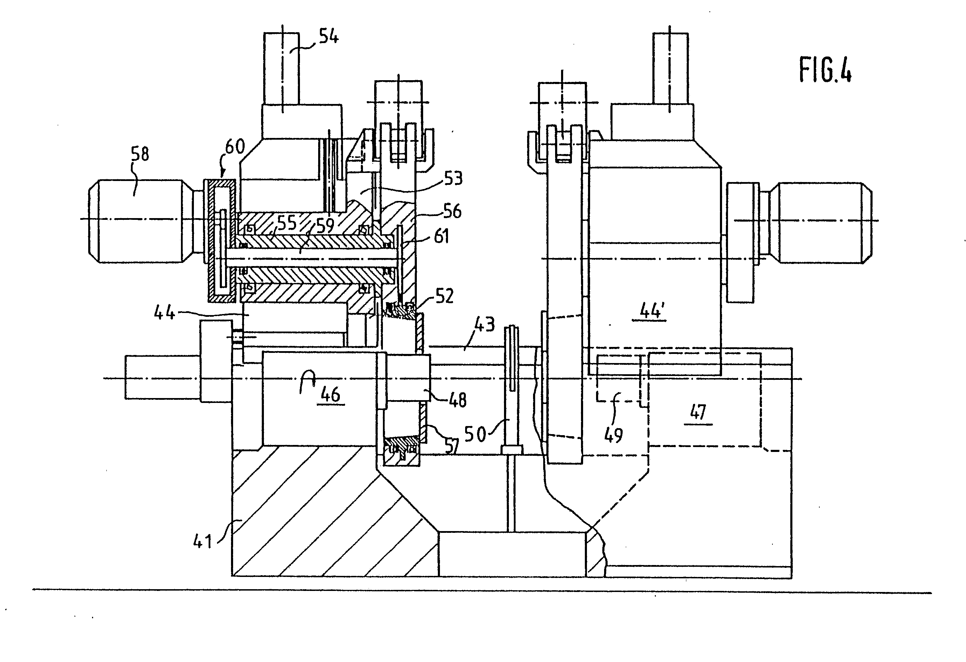

Die in Figuren 3 und 4 dargestellte Kurbelwellenfräsmaschine weist — abweichend von der Kurbelwellenfräsmaschine nach Figuren 1 und 2 — ein Horizontalbett 41 auf, das zwei Längsführungsschienen 42 und 43 trägt, auf denen ein Längsschlitten 44 horizontal verschiebbar ist. Unterhalb des Schlittens 44 ist wieder Raum 45 für einen nicht dargestellten Späneförderer vorgesehen. Ferner trägt das Maschinenbett 41 zwei Spannstöcke 46 und 47 mit je einem Spannfutter 48 bzw. 49 ; die Spannstöcke und Spannfutter sind im übrigen identisch mit denen der Kurbelwellenfräsmaschine nach Figuren 1 und 2 ; ferner sind bei dieser Ausführungsform eine feststehende Lünette 50 sowie ein zweiter Längsschlitten 44' vorgesehen, der spiegelbildlich zum Längsschlitten 44 ausgebildet ist, in der gleichen Weise wie der Längsschlitten 13' spiegelbildlich zum Längsschlitten 13 der Kurbelwellenfräsmaschine nach Figuren 1 und 2 ist ; die beiden Längsschlitten 44 und 44' tragen ihrerseits im übrigen die gleichen Elemente in spiegelbildlicher Weise, so daß im folgenden nur noch der Längsschlitten 44 beschrieben wird.

Der Längsschlitten 44 trägt eine Vertikalführung 52, deren Ebene — abweichend von der Kurbelwellenfräsmaschine nach Figuren 1 und 2 — senkrecht zur Richtung der Horizontalführung 42 liegt, und in der ein Vertikalschlitten 53 mittels eines Vorschubantriebes 54 auf und ab bewegbar ist.

Im Vertikalschlitten 53 ist ein Schwenkzapfen 55 gelagert, der an seinem einen Ende (in Figur 4 gesehen rechts) die eigentliche Fräseinheit 56 mit einem nur schematisch dargestellten Innenfräser 57 trägt, und an seinem anderen Ende (in Figur 4 gesehen links) einen Fräserantriebsmotor 58. Der Schwenkzapfen 55 selbst ist als Hohlwelle ausgebildet ; koaxial ist in ihm eine Fräserantriebswelle 59 gelagert, die über ein Vorgelege 60 vom Fräserantriebsmotor 58 angetrieben wird und über ein Ritzel 61 den Innenfräser 57 treibt.

Bei der Kurbelwellenfräsmaschine nach Figuren 3 und 4 liegen ersichtlich die Spannstöcke 46, 47, und damit natürlich erst recht die in den zugehörigen Spannfuttern eingespannte, der Übersichtlichkeit halber nicht dargestellte Kurbelwelle, unterhalb der Ebene der Längsführungen 42, 43, und der Innenfräser 57 reicht entsprechend tief hinab, während alle übrigen Teile sich oberhalb der Ebene der Führungen 42 und 43 und damit außerhalb des Bereiches befinden, in dem vom Werkstück herabfallende Späne auftreten können. Eine solche Anordnung ist möglich, wenn der Schwenkzapfen sich oberhalb des Werkstücks befindet, wie das bereits bei der Kurbelwellenfräsmaschine nach Figuren 1 und 2 der Fall ist, und bietet nicht nur Vorteile hinsichtlich des Späneabflusses, sondern auch noch Vorteile hinsichtlich der Geräuschdämmung.

Die Arbeitsweise der Kurbelwellenfräsmaschine nach Figuren 3 und 4 ist im übrigen die gleiche wie die nach Figuren 1 und 2, nur daß jeweils beim Verfahren der Längsschlitten 44 bzw. 44' es nicht mehr notwendig ist, eine Lünette zu lösen, zu verfahren, und neu zu spannen, da die feststehende Lünette 50 nur jeweils beim Einlegen der Kurbelwelle betätigt zu werden braucht. Dank der wesentlich verbesserten Stabilität, die dadurch ermöglicht ist, daß die Ausladung der Spannfutter 48 und 49 nicht länger zu sein braucht als die Abmessung des Innenfräsers 57 in Richtung der Werkstückachse, genügt eine solche feststehende Lünette auch in Fällen, in denen bisher wegen unzureichender Stabilität des Gesamtsystems zwei oder sogar mehr Lünetten erforderlich waren, die natürlich verfahrbar sein mußten. Es sei allerdings ergänzt, daß eine feststehende Lünette unter entsprechenden Bedingungen auch bei der Ausführungsform nach Figuren 1 und 2 verwendet werden kann, so daß auch dort diese Vereinfachung der Arbeitsweise erreicht werden kann.

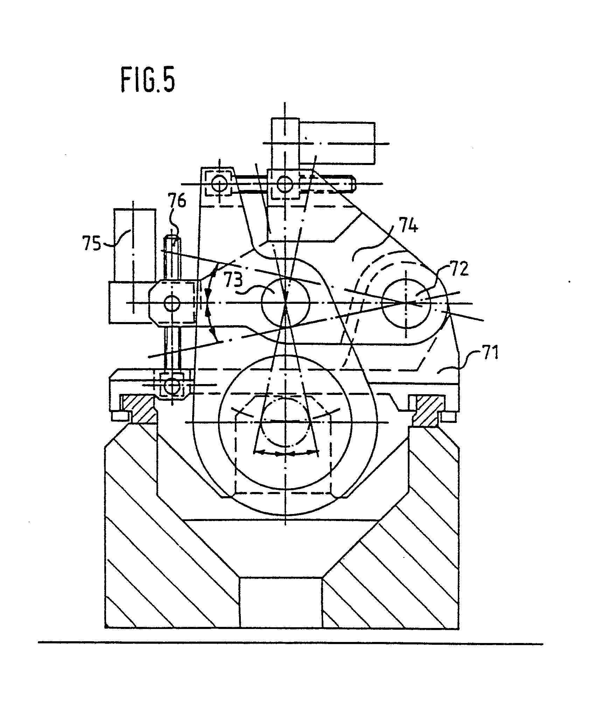

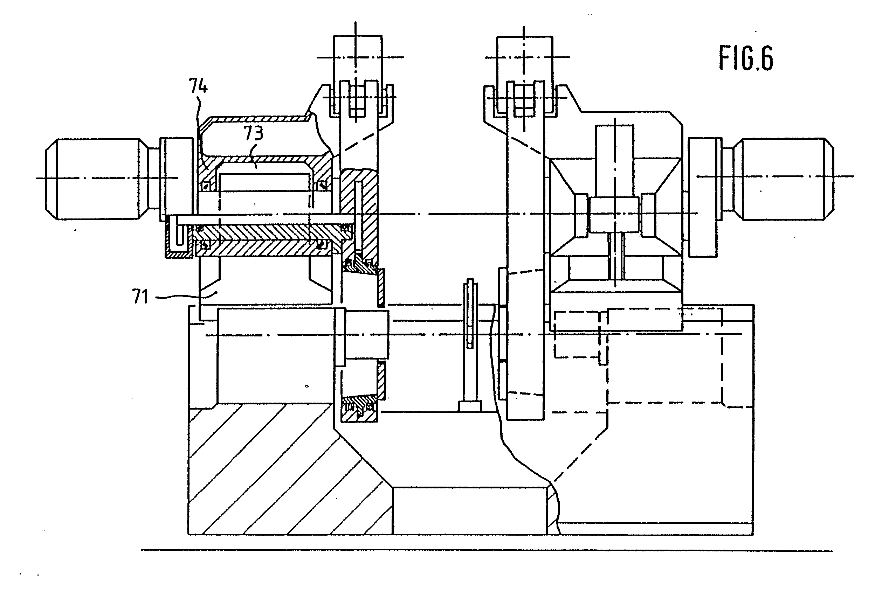

Die Kurbelwellenfräsmaschine nach Figuren 5 und 6 ist mit einer Ausnahme genauso aufgebaut wie die Kurbelwellenfräsmaschine nach Figuren 3 und 4 und arbeitet auch in prinzipiell der gleichen Weise ; es wird deshalb im folgenden nur noch der Unterschied beschrieben. Statt einer Vertikalführung 52 für einen Vertikalschlitten 53 wie bei der Ausführungsform nach Figuren 3 und 4 trägt bei der Kurbelwellenfräsmaschine nach Figuren 5 und 6 der — zu diesem Zweck natürlich anders ausgebildete — Längsschlitten 71 einen zweiten Schwenkzapfen 72 und in der gleichen Horizontalebene einen dem Schwenkzapfen 55 der Kurbelwellenfräsmaschine nach Figuren 3 und 4 entsprechenden Schwenkzapfen 73. Dieser zweite Schwenkzapfen 72 trägt eine Schwenkeinheit 74, die in der gleichen Weise wie der Vertikalschlitten 53 der Ausführungsform nach Figuren 3 und 4 als Träger für den ersten Schwenkzapfen 73 dient, der im übrigen genauso aufgebaut ist und die gleichen Funktionen erfüllt wie der Schwenkzapfen 55 der Ausführungsform nach Figuren 3 und 4. Für den Schwenkträger 74 ist ferner ein Vorschubantrieb 75 mit einer Kugelrollspindel 76 vorgesehen, der in gleicher Weise aufgebaut ist wie etwa der Vorschubantrieb 27, 28 der Ausführungsform nach Figuren 1 und 2, jedoch die Funktionen des Vorschubantriebes 22 der Ausführungsform nach Figuren 1 und 2 erfüllen. Die Ausführungsform nach Figuren 5 und 6 hat gegenüber der nach Figuren 3 und 4 den Vorteil einer erheblich leichteren Konstruktion.

## Patentansprüche

1. Kurbelwellenfräsmaschine mit wenigstens einer Fräseinheit mit Innenfräser (26, 26', 57) zum Bearbeiten der Lagerzapfen und Wangen insbesondere der Hublager von Kurbelwellen, die in einem Längsschlitten (13, 13', 44, 44', 71) gelagert ist, der auf einer Führung in Richtung parallel zur Werkstücklängsachse verschiebbar ist, und die um eine zur Werkstücklängsachse parallele Achse verschwenkbar ist, wobei die Vorschubbewegung des Innenfräsers auf einer Kreisbahn um den zu bearbeitenden Zapfen verläuft und bei der die Kurbelwelle während der Bearbeitung stillsteht, dadurch gekennzeichnet, daß

1. die Schwenkachse und der zugehörige Vorschubantrieb (27, 28) seitlich oder oberhalb des Werkstücks (19, 19', 19'') angeordnet sind,

2. der die Schwenkachse definierende Schwenkzapfen (23 ; 55, 73) auf einem mittels eines zweiten Vorschubantriebes (22, 75) in einer zur Werkstücklängsachse senkrechten Ebene im wesentlichen parallel zur Verbindung Schwenkachse-Werkstückachse bewegbaren Träger (21 ; 53 ; 74) angeordnet ist,

3. alle Teile der Fräseinheit (24 ; 56) und alle diese tragenden Bauteile, einschließlich des Längsschlittens, die in Richtung parallel zur Werkstückachse über den Innenfräser (26, 26', 57) bzw. eine diesen tragende Trommel vorstehen, seitlich oder oberhalb des benachbarten Spannstockes (15, 16 ; 46, 47) liegen.

2. Kurbelwellenfräsmaschine nach Anspruch 1, dadurch gekennzeichnet, daß der Schwenkzapfenträger ein vertikal verschiebbarer Schlitten (21 ; 53) ist.

3. Kurbelwellenfräsmaschine nach Anspruch 1 oder 2, dadurch gekennzeichnet, daß der Schwenkzapfen als Hohlwelle (55) ausgebildet ist und an seinem dem Innenfräser (57) fernen Ende den Innenfräserantrieb (58, 60) trägt, und daß eine Fräserantriebswelle (59) koaxial im Schwenkzapfen (55) angeordnet ist.

4. Kurbelwellenfräsmaschine nach Anspruch 1, dadurch gekennzeichnet, daß der Schwenkzapfenträger (74) um eine zur Werkstücklängsachse parallele Schwenkachse verschwenkbar ist, die sowohl zur erstgenannten Schwenkachse als auch zur Werkstückachse versetzt ist.

5. Kurbelwellenfräsmaschine nach einem der Ansprüche 2 bis 4, dadurch gekennzeichnet, daß die Längsschlittenführung eine Horizontalführung ist, deren Ebene oberhalb des Werkstückes liegt.

## Claims

1. Crankshaft milling machine having at least one milling unit including inner milling cutter means (26, 26', 57) for milling bearing pins and flanks, in particular for the piston rod bearings of crankshafts, supported in a longitudinal carriage (13, 13', 44, 44', 71) slidable on a guide means in a direction parallel to the longitudinal axis of the workpiece, and which is adapted to be pivoted about an axis parallel to the longitudinal axis of the workpiece, the feed movement of the inner milling cutter means describing a circular track about the pin to be milled, and in which the crankshaft is at rest during milling, characterized in that

1. the pivot axis and the associated feed drive (27, 28) are disposed laterally or above the workpiece (19, 19', 19''),

2. the pivot pin (23 ; 55, 73) defining the pivoting axis is disposed on a support (21 ; 53 ; 74) adapted to be moved by a second feed drive means (22, 75) in a plane perpendicular to the longitudinal axis of the workpiece and substantially parallel to the connection pivot axis — workpiece axis,

3. all portions of the milling unit (24 ; 56) and all structural components supporting it, including the longitudinal carriage, which extend beyond the inner milling cutter means (26, 26', 57) and a drum carrying same, respectively, in a direction parallel to the workpiece axis, are disposed laterally or above the adjacent chucking means (15, 16 ; 46, 47).

2. Crankshaft milling machine according to claim 1, characterized in that the carrier of the pivot pin is a vertically slidable carriage (21 ; 53).

3. Crankshaft milling machine according to claim 1 or 2, characterized in that the pivot pin is designed as a hollow shaft (55) and carries the inner milling cutter means drive (58, 60) at its end remote to the inner milling cutter means (57), and that a miller drive shaft (59) is disposed coaxially within the pivot pin (55).

4. Crankshaft milling machine according to claim 1, characterized in that the pivot pin support (74) is pivotable about a pivot axis parallel to the longitudinal axis of the workpiece, which pivot axis is displaced both with respect to the first mentioned pivot axis and the workpiece axis.

5. Crankshaft milling machine according to any of the claims 2 to 4, characterized in that the guiding means for the longitudinal carriage is a horizontal guiding means the plane of which is disposed above the workpiece.

**Revendications**

1. Machine à fraiser les vilebrequins possédant au moins une tête de fraisage avec une fraise intérieure (26, 26', 57) pour usiner les tourillons, les flasques et en particulier les manetons de vilebrequins, qui est montée dans un chariot longitudinal (13, 13', 44, 44', 71) déplaçable dans un guide parallèlement à l'axe de la pièce et qui est pivotante autour d'un axe parallèle à l'axe longitudinal de la pièce, le mouvement d'avance de la fraise intérieure s'effectuant suivant un trajet circulaire autour du maneton à usiner et le vilebrequin étant stationnaire pendant l'usinage, caractérisée en ce que

1. l'axe de pivotement et le mécanisme d'avance correspondant (27, 28) sont disposés à côté ou au-dessus de la pièce (19, 19', 19"),

2. le tourillon de pivotement (23 ; 55, 73) définissant l'axe de pivotement est disposé sur un support (21 ; 53 ; 74) qu'un second mécanisme d'avance (22, 75) peut déplacer dans un plan perpendiculaire à l'axe longitudinal de la pièce, pour l'essentiel parallèlement à la liaison axe de pivotement — axe de la pièce,

3. tous les organes de la tête de fraisage (24 ; 56) et tous les organes qui la portent, y compris le chariot longitudinal, qui font saillie de la fraise intérieure (26, 26', 57) ou d'un tambour qui la porte, dans la direction parallèle à l'axe de la pièce, sont situés à côté ou au-dessus du bloc de serrage (15, 16 ; 46, 47) voisin.

2. Machine selon la revendication 1, caractérisée en ce que le support du tourillon de pivotement est un chariot (21 ; 53) déplaçable verticalement.

3. Machine selon la revendication 1 ou 2, caractérisée en ce que le tourillon de pivotement est réalisé comme un arbre creux (55) et porte le dispositif de commande (58, 60) de la fraise intérieure à son extrémité éloignée de la fraise intérieure (57) et qu'un arbre de commande de fraise (59) est disposé coaxialement dans le tourillon de pivotement (55).

4. Machine selon la revendication 1, caractérisée en ce que le support du tourillon de pivotement (74) peut pivoter autour d'un axe de pivotement parallèle à l'axe longitudinal de la pièce, qui est décalé à la fois par rapport à l'axe de pivotement mentionné en premier et par rapport à l'axe de la pièce.

5. Machine selon une des revendications 2 à 4, caractérisée en ce que le guide du chariot longitudinal est un guide horizontal dont le plan est situé au-dessus de la pièce.

FIG.1

FIG.2

FIG.3

FIG.4

# 0 097 271

## FIG.5

5

FIG.6

0 097 271